# EUROPEAN PATENT APPLICATION

(11) **EP 2 404 872 A1**
(43) Date of publication of application: **11.01.2012**
(21) Application number: 10168435.5
(22) Date of filing: 05.07.2010
(51) Int. Cl.: C01B 7/20, F17C 13/08

(54) **Fluorine container**

(71) Applicant: Solvay SA, 1050 Brussels (BE)
(72) Inventor: Riva, Marcello, 30175 Hannover (DE); Mross, Stefan, 1030 Brussels (BE); Schwarze, Thomas, 31278 Ahlten (DE)
(74) Representative: Mross, Stefan P.M.

(57) **Abstract**

A tube trailer containing a gas comprising from 35 to 92.5 vol % of molecular fluorine.

## Description

The present invention concerns a container for supply of fluorine containing gas, a method for supply of such gas and a semiconductor manufacturing plant using the container.

Molecular fluorine containing gas is used inter alia in the semiconductor industry, for example for cleaning process chambers, for example CVD chambers for manufacture of flat panels or manufacture of photovoltaic elements.

It has now been found a container which is particularly suitable to provide molecular fluorine containing gas to applications or plants as described above.

The invention concerns in consequence a tube trailer containing a gas comprising from 35 vol % to 92.5 vol % of molecular fluorine.

It has been found that the tube trailer according to the invention allows for particularly efficient supply of fluorine gas having high efficiency in its intended uses, in particular for medium requirements (e.g. 5 to 100 tons of molecular fluorine/year based on 100 % molecular fluorine), under acceptable conditions of safety and toxicity.

In the tube trailer according to the invention, the remainder of the gas comprising molecular fluorine generally consists or consists essentially of an inert gas.

Typically, inert gas will substantially not react with molecular fluorine at ambient temperature. Examples of suitable inert gases are selected from helium, neon, argon, xenon, nitrogen and NF₃. Preferably, the inert gas is selected from argon, nitrogen and mixtures thereof. In one particularly preferred embodiment, the inert gas is argon. In another particularly preferred embodiment, the inert gas is nitrogen.

In the tube trailer according to the invention, the gas often comprises a molecular fluorine in an amount equal to or more than 50 vol %, preferably equal to or more than 80 vol % and more preferably to or more than 85 vol %. In the tube trailer according to the invention, the gas often comprises a molecular fluorine in an amount equal to or less than 92 vol %, preferably equal to or less than 91 vol % and more preferably equal to or less than about 90 vol %.

In a particular preferred embodiment, the composition is 90 % fluorine and 10 % Argon. In another preferred embodiment, the composition is 90 % fluorine and 10 % NF₃. In a third preferred embodiment, the composition is 90 % fluorine and 10 % N₂.

The tube trailer according to the invention comprises generally at least one cylindrically-shaped hollow body having at least a valve for charging and discharging gas. The hollow body or a plurality of hollow bodies may suitably be mounted on a support frame or contained in a second container.

If the tube trailer comprises a plurality of hollow bodies, it preferably comprises from 4 to 64 hollow bodies, more preferably from 8 to 16 hollow bodies. In this case, the hollow bodies are preferably of substantially identical shape and dimensions.

Generally, the total internal volume of the molecular fluorine containing gas containing space of the tube trailer according to the invention is from 1 to 5 m³, preferably from 1,5 to 3 m³.

Generally, the partial pressure of the molecular fluorine containing gas in the containing space of the tube trailer according to the invention is from 5 to 30 bar, preferably from 10 to 28 bar.

The tube trailer according to the invention, in particular parts thereof which are supposed to be in contact with gas such as, if appropriate, hollow bodies, valves and lines for charging and/or discharging gas are suitably made of or coated with material resistant to molecular fluorine. Examples of such materials include Monel metal, stainless steel, copper, and, preferably, nickel.

The tube trailer according to the invention preferably further comprises a safety device operable to inject inert gas, in particular as described above, into gas containing parts of the tube trailer. The optional safety device suitably comprises a storage tank for inert gas, in particular nitrogen. The gas is preferably stored under high pressure, for example from 100 to 300 bars, more particularly from 250 to 270 bars.

The quantity of inert gas in the optional safety device is generally sufficient to reduce the fluorine concentration in the tube trailer to from 1 to less than 35 % vol, preferably to less than 30 % vol. If appropriate, this quantity is determined relative to the intended quantity of fluorine containing gas to be charged into the tube trailer.

The optional safety device may be connected, for example, to a valve for charging and discharging gas connected to a hollow body as described above. It can also be suitably connected to a line for charging and/or discharging gas preferably connected to a hollow body as described above.

In a first particular aspect, the tube trailer according to the invention may comprise a safety device which is operable to reduce the pressure of a hollow body. Typically such safety device is operable to reduce the pressure of the hollow body by at least 50 % relative to the initial pressure. This optional safety device can be constituted for example by a hollow body comprising for example inert gas at atmospheric pressure or being kept under vacuum, which is connected to the other hollow bodies and which is made of suitable materials to contain fluorine.

In a second particular aspect, such hollow body contains a chemical which can safely react with fluorine. "Safely react" is understood to denote in particular that the exothermicity of the reaction between fluorine gas and the chemical is sufficiently low to avoid safety concerns such as explosion or uncontrolled heating of the hollow body. As an example of an effective chemical, CaCO₃ is mentioned. By applying safety devices as described herebefore particularly efficient reduction of fluorine gas concentration can be achieved and the possible consequences of a leakage can be efficiently mitigated.

In a preferred case, each hollow body is connected with a safety device. More preferably, each hollow body is connected with at least one safety device according to the first particular aspect and with at least one safety device according to the second particular aspect. This is a particularly efficient embodiment to reduce the pressure of the defective hollow body and to reduce the fluorine concentration in the defective hollow body.

The optional safety device is ideally interposed between the hollow bodies filled with the fluorine mixture in order to outdistance them.

The optional safety device is generally equipped with a detector for anomalous state of the tube trailer, for example a detector for gas leakage of molecular fluorine containing gas, and is generally capable to trigger action of the safety device. Another example of suitable safety detector is a pressure drop detector.

The tube trailer according to the invention will further be illustrated in a non limitative manner by the appended drawings.

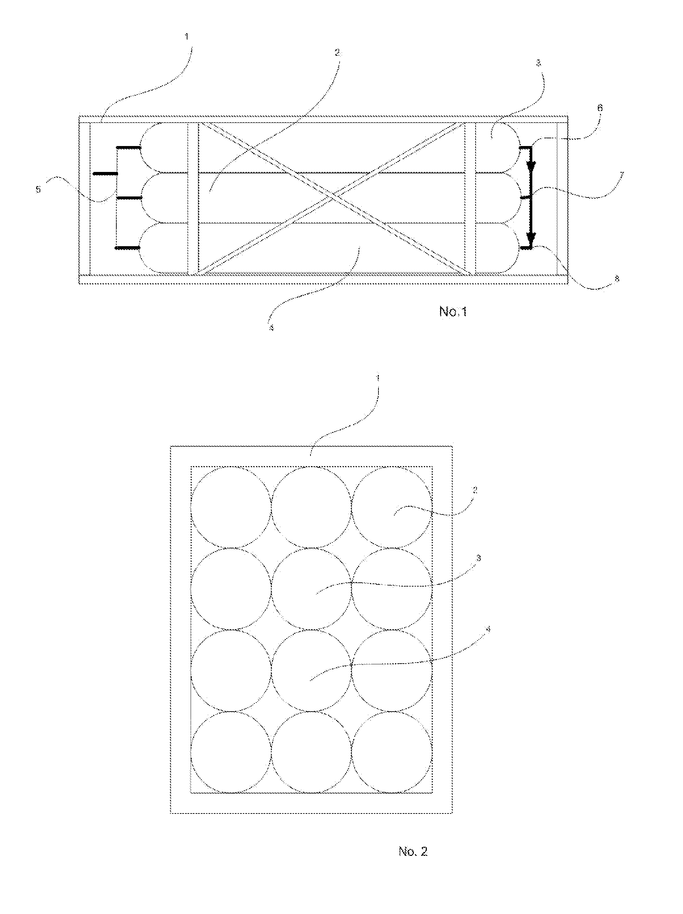

Figure 1 shows a lateral view of a tube trailer according to the invention. An assembly of a tube filled with molecular fluorine containing gas (2), a first safety device under vacuum (3) and a second safety device containing nitrogen under pressure (4) is mounted on support frame (1). The tube filled with molecular fluorine containing gas (2) is connected to fluorine discharge valve (5), which in turn is connected to safety devices (3) and (4). The tube filled with molecular fluorine containing gas (2) is further connected to safety valve (7), which is operable to connect tube (2) to sucking line (6) which is connected to safety device (3) and/or to connect tube (2) to blowing line (8) which is connected to safety device (4.)
Figure 2 shows a frontal view of a tube trailer according to the invention having tubes filled with molecular fluorine containing gas (2), first safety device under vacuum (3) and second safety device containing nitrogen under pressure (4) mounted in rectangular (4x3) arrangement on support frame (1).

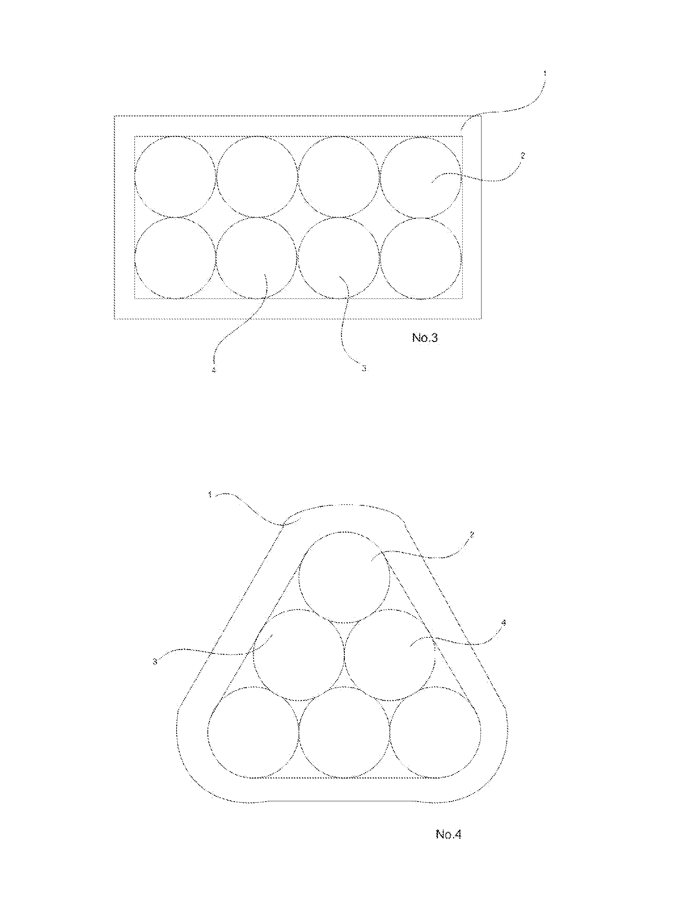

Figure 3 shows a frontal view of a tube trailer according to the invention having tubes filled with molecular fluorine containing gas (2), first safety device under vacuum (3) and second safety device containing nitrogen under pressure (4) mounted in rectangular (4x2) arrangement on support frame (1).
Figure 4 shows a frontal view of a tube trailer according to the invention having tubes filled with molecular fluorine containing gas (2), first safety device under vacuum (3) and second safety device containing nitrogen under pressure (4) mounted in triangular arrangement on support frame (1).

It is understood that in figures 2 to 4 the respective tube trailers comprise one safety device (3) and one safety device (4). The remaining tubes therein are all tubes filled with molecular fluorine containing gas (2).

The invention concerns also a method for supplying a gas containing molecular fluorine comprising use of the tube trailer according to the invention to transport gas from a gas manufacturing site to a user site. For example, the tube trailer, in particular when mounted on a support frame, can be transported on a truck. In another aspect, the tube trailer, in particular when contained in a second container, can be transported on a train or by ship. Generally, at the user site, the tube trailer according to the invention is unloaded from the means for transportation and connected to a point of use requiring supply of molecular fluorine containing gas.

In one particular embodiment, the method of supplying gas containing molecular fluorine according to the invention comprises
(a) a first phase during which a gas containing molecular fluorine is supplied to the user site using the tube trailer according to the invention and
(b) a second phase wherein a gas containing molecular fluorine is supplied to the user site using a molecular fluorine generating device which is located on the user site.

Typical fluorine generating devices which can be used comprise, for example, fluorine generating cells producing molecular fluorine by electrolysis of a molten salt electrolyte.

In a first aspect of said particular embodiment, the gas supplied during the first and the second phase respectively have substantially the same or the same composition.

In a second aspect of said particular embodiment, the composition of the gas supplied during the first phase is in accordance with the composition required by the tube trailer according to the invention and the composition of the gas supplied during the second phase is different from the composition of the gas supplied during the first phase. Particularly in this aspect, the gas supplied during the second phase can consist or consist essentially of molecular fluorine.

The invention concerns also a semiconductor manufacturing plant having a gas supply system wherein the tube trailer according to the invention is connected to the gas supply system of the semiconductor manufacturing plant. In a preferred aspect, the semiconductor manufacturing plant according to the invention is suitable to manufacture photovoltaic elements. More particularly, plant allows for photovoltaic elements by CVD of silicon-containing compounds in a treatment chamber and using molecular fluorine to etch silicon containing compounds or, preferably, clean the treatment chamber are manufactured. The semiconductor manufacturing plant according to the invention has generally a molecular fluorine requirement of from 5 to 100, preferably from 10 to 50 metric tons per year. This requirement is expressed as 100 % molecular fluorine.

The examples here after intend to illustrate the invention without however limiting it.

### Example 1

The toxicity of the gas mixture 90 % Fluorine/10% Argon contained in the tube trailer according to the invention is expressed by its LC₅₀ value of 205 mg/m³, and it is therefore possible to transport it by MEGS, or by tube trailers (as MEGS are normally called). For comparison, 100 % fluorine has an LC₅₀ value of 185 mg/m³, and it is therefore not possible to transport it by tube trailers.
tube trailers are particularly convenient for those consumers that require an amount of fluorine which is higher then 10tons/y. In this case the supply of fluorine through bundles, which contain only 26kg of fluorine, is expensive because it requires the delivery of more then 375 bundles/y. The same quantity can be more economically supplied with about 14 tube trailers. A further advantage of the delivery in tube trailers is the lower handling required, which is a potential source of accident. In fact, the major part of accidents in the delivery of fluorine happens during the connection of the cylinders to the gas delivery system. The supply with tube trailers reduces the necessity of this operation by a factor of 25.

### Example 2

A mixture 90 % Fluorine/10 % Ar is tested in a PECVD (Plasma Enhance Chemical Vapor Deposition tool) which is assisted by an RPS (Remote Plasma System). The function of the RPS is to dissociate by the means of plasma the gases that are fed in, so that it can actively react on the deposits of the PECVD tool and remove them in gaseous form. The system is connected to a vacuum pump which maintains a pressure between 200 and 600 mT in the system.

The plasma ignition is possible without any problem and the process shows high stability.

The 90 % fluorine/10 % Ar mixture is fed through the RPS at 1000 sccm and 2000 sccm. The power of the microwave energy source is varied from 2000 to 4000 W without showing any effect on the cleaning rate, meaning that 2000 W are enough to dissociate completely fluorine. The time necessary to clean a layer of 250 nm of a-Si deposited on a glass substrate is measured. The cleaning time results to be linear with the flow of fluorine, meaning that the double of time is necessary to clean the sample etched with half flow.

The same test is repeated employing 100 % fluorine instead of the mixture. Argon is added at the beginning to switch on the plasma, afterward its feed is stopped. The plasma results to be stable. The cleaning time of the 90 % fluorine/10 % Ar mixture results to be 10 % higher at similar conditions of flow, pressure and power of the microwave plasma source than the one of elemental fluorine. In other word, the etching rate is proportional with the concentration of fluorine. It is enough to increase the flow of the 90 % fluorine/10 % Argon of the 10 % to obtain the same cleaning rate as flowing 100 % fluorine, but the mixture offers the advantage of being supplied in tube trailers.

### Example 3

The mixture 90 % F₂/10 % NF₃ is tested in the same equipment as described in example 2.10 % Ar is added at the beginning to ignite the plasma.

The cleaning time is slowly dependent from the power of the microwave source, indicating that more energy is necessary to dissociate NF₃ than F₂. The cleaning time at 2500 W is slightly shorter than at 2000 W. Above 2500 W, the cleaning time remains constant. NF₃ improves the etching rate at the same volumetric flow, because it introduced 3 moles of fluorine radicals per mole of NF₃, whilst F₂ introduces only 2. On the other hand, on a mass prospective, fluorine produces more radicals/kg than NF₃ (which contains 20 % of nitrogen). The tests shows that at the same conditions of flow, the mixture 90 % F₂/10 % NF₃ cleans 5 % faster than 100 % fluorine and 115 % faster than the mixture 90 % fluorine/10 % Ar. The mixture 90 % fluorine/10 % NF₃ offers the advantage of being delivered in Tube Trailers, it offers the best cleaning performance in terms of volumetric flow, it has a minimum gap in performance if compared on mass basis with F₂ 100 %, and it has a nominal GWP which is only 10 % of the value of NF₃ (10 % of 17200 = 172). However, its GWP is not 0 like in the case of the fluorine/Argon mixture.

### Example 4

Different mixtures containing 90 % fluorine and 10 % inert gas (like He, N₂, Ar, NF₃ or mixtures thereof) are tested in the same equipment of example 1, but the RPS has been switched off. The chuck on which the glass sample lays is heated to a temperature of 200°C, simulating the temperature range at which the α-Si and µc-Si are normally deposited. As the cleaning process is not assisted by RPS but the reaction is eased by the relatively high temperature of the deposit, we will refer to this process as 'thermal cleaning'.

All tested mixtures shows the same etching rate.

The etching rates at 600mTorr and flows between 1000 sccm and 2000 sccm results to be only slightly slower (-15 %) than the correspondent ones that have been measured using the 90 % F₂/10 % Ar mixture with the RPS assisted technology.

The experiment is repeated at the same conditions using 100 % F₂. The correspondent etching rate results to be, at the same conditions, the 10 % higher than the similar thermal cleaning process performed with the 90 % mixture. On the other hand, the etching rate results to be the 15 % slower than the correspondent cleaning experiment RPS assisted.

The thermal cleaning process is repeated with the 90 % F₂/10 % Ar increasing the pressure at 660 mTorr (10 % higher). The cleaning rate is directly proportional with the pressure, and therefore it results to be the 10 % faster, or in other word it has reached the same rate as when using 100 % fluorine.

The experiment using the mixture 90 % F₂/10 % Ar is repeated at 690 mTorr (+ 15 %). The proportionality between the cleaning rate and pressure is confirmed, because the cleaning rate results to be the 15 % faster than the thermal cleaning process at 600 mTorr. In other words, with this experiment the same performance of the 90 % F₂/10 % Ar in the RPS assisted cleaning process.

The advantage of the thermal cleaning is that it is possible to save the RPS sources when purchasing the industrial equipment and it is possible to save the energy to activate the plasma. The 90 % fluorine mixtures have GWP = 0, can be transported in tube trailers and can clean the equipment at the same rate as F₂ 100 % or NF₃ in the RPS assisted process if the pressure is slightly increased.

### Example 5

A tube trailer as described in figure 1 is filled with a gas mixture consisting of 90 vol % F₂ -gas and 10 vol % Argon at a chemical plant by means of a compressor. The flow rate is set at a level that is compatible with the materials that come in contact with the pure fluorine. The guidelines for handling pure fluorine are described, for example, in the EIGA Code IGC Document 140/10E (http://www.eiga.org) and can be applied to the filling of the mixture. The tube trailer is then loaded onto a truck and safely transported by road to a plant where photovoltaic panels or LCD panels are produced. The tube trailer is connected to the gas delivery system of the above mentioned plant. This gas delivery system has been designed following the guidelines contained in the already mentioned EIGA code. The system is passivated. The connection follows standard procedures which are used to connect cylinders of high purity gases in the semiconductor industry. The valve is opened and the tube trailer can deliver fluorine containing gas to the plant.

## Claims

1. A tube trailer containing a gas comprising from 35 to 92.5 vol % of molecular fluorine.

2. The tube trailer according to claim 1, wherein the remainder of the gas consists essentially of an inert gas preferably selected from helium, neon, argon, xenon, nitrogen and NF₃.

3. The tube trailer according to claim 2, wherein the inert gas is selected from argon, nitrogen and mixtures thereof, preferably, argon.

4. The tube trailer according to anyone of claims 1 to 3, wherein the gas comprises from 80 to 92 vol % of molecular fluorine.

5. The tube trailer according to claim 4, wherein the gas comprises from 85 to 91 vol % of molecular fluorine, preferably about 90 %.

6. The tube trailer according to anyone of claims 1 to 5, further comprising a safety device operable to inject inert gas into gas containing parts of the tube trailer.

7. The tube trailer according to claim 6, wherein the safety device contains nitrogen.

8. The tube trailer according to claims 6 or 7 wherein the quantity of inert gas in the safety device is sufficient to reduce the fluorine concentration in the tube to less than 35 % vol, preferably less than 20 % vol.

9. The tube trailer according to anyone of claims 1 to 8 further comprising a safety device which is operable to reduce the pressure of a hollow body.

10. A semiconductor manufacturing plant having a gas supply system
wherein the tube trailer according to anyone of claims 1 to 9 is connected to the gas supply system of the semiconductor manufacturing plant.

11. The semiconductor manufacturing plant according to claim 10 which is suitable to manufacture photovoltaic elements.

12. The semiconductor manufacturing plant according to claim 10 or 11, which has a molecular fluorine requirement of from 5 to 100, preferably from 10 to 50 metric tons per year.

13. A method for supplying a gas comprising use of the tube trailer according to anyone of claims 1 to 12 to transport gas from a gas manufacturing site to a user site.

14. The method according to claim 13, comprising
(a) a first phase during which a gas containing molecular fluorine is supplied to the user site using the tube trailer according to the invention and
(b) a second phase wherein a gas containing molecular fluorine is supplied to the user site using a molecular fluorine generating device which is located on the user site.

15. A gas mixture in accordance with anyone of claims 1 to 7.

16. Use of the gas mixture according to claim 15, as chamber cleaning gas in the semiconductor industry.
